# EUROPEAN PATENT SPECIFICATION

(11) **EP 1 491 834 B1**
(45) Date of publication and mention of the grant of the patent: **22.08.2007**
(21) Application number: 04013983.4
(22) Date of filing: 15.06.2004
(51) Int. Cl.: F25D 23/06, F25D 25/02

(54) **Domestic refrigeration appliance with removable shelf supports**
Haushaltskühlschrank mit entfernbaren Regalträgern
Réfrigérateur ménager avec supports d'étagère amovibles

(30) Priority: 24.06.2003 IT MI20031281
(43) Date of publication of application: 29.12.2004
(73) Proprietor: WHIRLPOOL CORPORATION, Benton Harbor Michigan 49022 (US)
(72) Inventor: Ribolzi, Augusto Whirlpool Europe s.r.l, 21025 Comerio (IT); Giudici, Giorgio Whirlpool Europe s.r.l, 21025 Comerio (IT); Casoli, Fiorenzo Whirlpool Europe s.r.l, 21025 Comerio (IT)
(74) Representative: Guerci, Alessandro

(56) References cited:
- GB-A- 983 287
- GB-A- 1 244 271
- GB-A- 1 267 716
- US-A- 1 767 316
- US-A- 1 816 694
- US-A- 2 141 892
- US-A- 2 303 673

## Description

The present invention relates to a refrigeration appliance, in particular a refrigerator, provided with supports for its shelves.

In traditional refrigerators the internal shelves rest on projecting support bars formed within the inner lining of the refrigeration appliance. These supports are provided in a larger number than the shelves to enable the user to arrange these at the most suitable height. The number and size of these supports negatively affects the useful capacity of the refrigeration appliance and raises hygiene problems as the supports (not being removable) cannot be thoroughly cleaned.

GB-A-1 244 271 describes a fixing device for a refrigeration accessory, composed of least three parts: an anchor (1), an insert (2) and a screw (14).

An object of the present invention is to provide a refrigeration appliance having supports which can be thoroughly cleaned, while affecting the capacity to a lesser extent that traditional known supports.

This and further objects which will be apparent from the ensuing detailed description are attained by a refrigeration appliance in accordance with the technical teachings of the accompanying claims.

The invention will be better understood from the description of a preferred embodiment thereof given hereinafter by way of non-limiting example and illustrated in the accompanying drawings, in which:
Figure 1 is a partial perspective view of the preservation compartment of a refrigerator, the compartment being provided (on a vertical wall) with removable supports for shelves;
Figure 2 is a partial perspective exploded view of a support and the means enabling it to be mounted on the walls of the preservation compartment of a refrigeration appliance;
Figure 3 is a partial section on the line III-III of Figure 1;
Figure 4 is a view showing by transparency a support together with two vertical sections through the points at which the support is connected to the wall of the compartment of the refrigeration appliance (the sections in question correspond essentially to the section III-III of Figure 1.

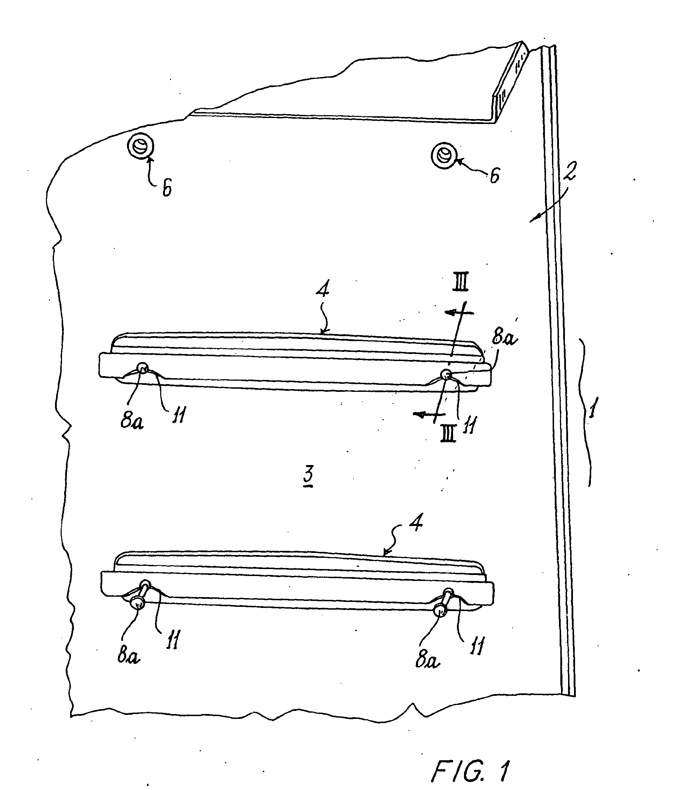

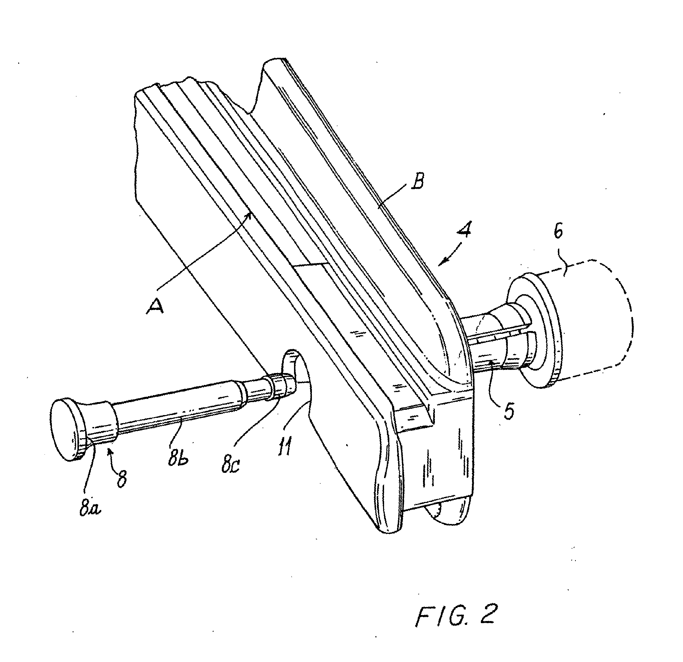

With reference to Figure 1, the reference numeral 1 indicates overall a domestic refrigeration appliance, of which Figure 1 shows part of the relative preservation compartment 3 bounded by horizontal and vertical walls; these latter comprise an end wall and two side walls 2. In the figure it can be seen that one of the side walls carries two substantially bar-like removable supports 4 for the conventional shelves on which the products to be cooled in the compartment are rested. These bar-like supports 4 are provided, in two well defined positions, with axially slotted tubular extensions 5 (see Figures 2, 3, 4) which are inserted into bushes 6 mounted in the side walls 2 and embedded in the insulation 7 of the refrigeration appliance. Removable fixing to the bushes 6 is achieved by a divaricable (extractable) peg 8 which is inserted into the slotted tubular extensions 5 to divaricate them by the amount necessary to ensure stability but without affecting the removability of the divaricable peg 8 and hence of the support 4, so enabling it to be located at different heights and to be thoroughly cleaned.

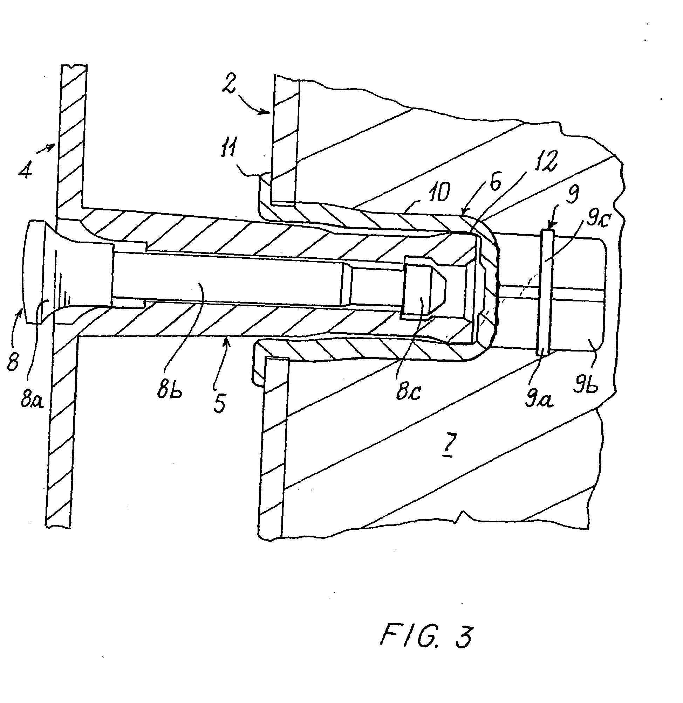

In detail, the bush 6 embedded in the insulation 7 comprises a fixing head 9 formed (Figure 3) from three mutually perpendicular ribs 9a, 9b and 9c. The bush 6 also comprises a socket part 10, flanged about its periphery 11 and forming at its base a slight annular undercut 12.

The extractable divaricable peg 8 comprises a head 8a and a shank 8b terminating with a slight enlargement 8c which divaricates the end of the slotted tubular extension 5 shaped for the purpose.

At the peg 8 the substantially bar-like support 4 presents a lower recess 11 (Figures 1 and 2) to offer the user a comfortable position to exert traction force on the peg 8 in order to extract it from the tubular appendix 5 and hence enable the bar-like support 4 to be removed.

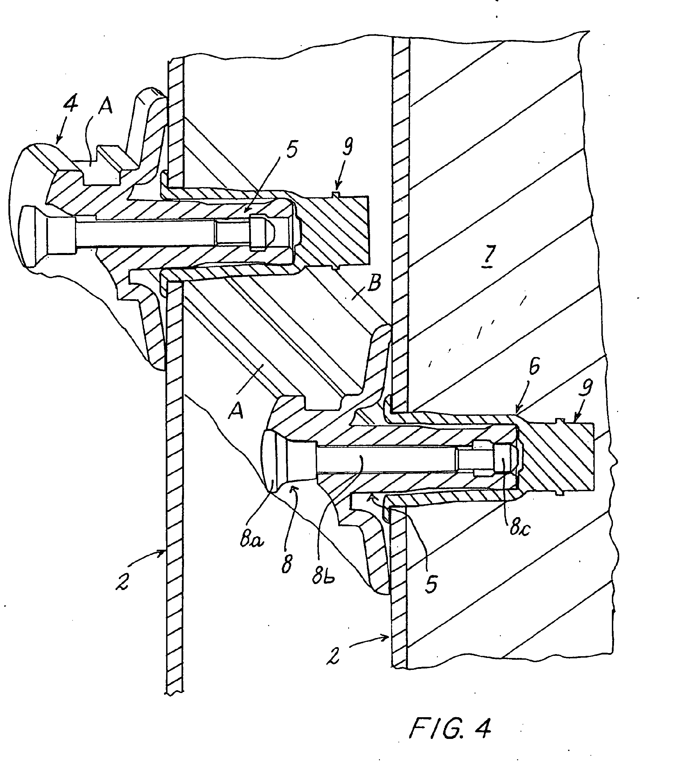

The bar-like support 4 possesses the two stated characteristics, namely the presence of the two slotted tubular appendices 5 and the recesses 11 by which access to the peg 8 is facilitated. For the remainder, the support can have any shape suitable for its shelf support function. Generally, such a support can have a horizontal ledge-like supporting part (indicated by A in Figures 2 and 4) and a vertical part (indicated by B in Figures 2 and 4) applied to the liner 2. The manner of mounting and removing the support 4 is apparent from the aforegoing. For mounting, the two tubular extensions 5 of the support 4 are inserted (with slight forcing) into the bushes 6 embedded in the insulation 7. The pegs 8 are then totally inserted into the tubular extensions, so locking the support 4 to the structure of the refrigeration appliance. When the user requires a different positioning of a shelf, the pegs 8 are removed, the tubular extensions extracted from the bush and the support 4 brought to the desired height to coincide with two suitably plugged bushes 6, from which the plugs are then removed and tubular extensions 5 of the support located in them, the support then being locked by fully inserting the pegs 8. The bar-like support can be thoroughly cleaned by virtue of its removal.

## Claims

1. A domestic refrigeration appliance, in particular a refrigerator, provided with a preservation compartment (3) having vertical walls (2) and shelves disposed on supports (4), said supports (4) being removably connectable to fixed bushes (6) of said vertical walls (2), wherein said fixed bushes (6) are positioned in said side walls (2) to insertably receive slotted tubular extensions (5) pertaining to the support (4), removable locking pegs (8) being insertable into said tubular extensions (5).

2. A refrigeration appliance as claimed in claim 1, wherein the support (4) presents recesses (11) to facilitate access to the locking pegs (8) for their removal.

3. A refrigeration appliance as claimed in the preceding claims, wherein the support (4) is substantially bar-like with a horizontal part (A) projecting from a vertical part (B) to be applied to the wall (2) of the preservation compartment (3).

## Patentansprüche

1. Hauhalts-Kühlgerät, insbesondere ein Kühlschrank, versehen mit einem Aufbewahrungs-Kompartiment (3), das vertikale Wände (2) und auf Stützen (4) angeordnete Regalböden aufweist, wobei die Stützen (4) entfernbar mit fixierten Buchsen (6) der vertikalen Wände (2) verbindbar sind, wobei die fixierten Buchsen (6) in den Seitenwänden (2) positioniert sind, um gestützte rohrförmige Verlängerungen (5), welche zu der Stütze (4) gehören, einsetzbar aufzunehmen und wieder entfernbare Verriegelungsstöpsel (8) in die rohrförmigen Verlängerungen (5) einsetzbar sind.

2. Kühlgerät wie in Anspruch 1 beansprucht, wobei die Stütze (4) Aufnahmen (11) bereitstellt, um den Zugang zu den Verriegelungsstöpseln (8) für deren Entfernung zu erleichtern.

3. Kühl-Gerät wie in einem der voranstehenden Ansprüche beansprucht, wobei die Stütze (4) im Wesentlichen stangenähnlich mit einem horizontalen Teil (A), der von einem vertikalen Teil (B) hervorsteht, um an der Wand (2) des Aufbewahrungs-Kompatiments (3) angebracht zu werden, ist.

## Revendications

1. Appareil de réfrigération ménager, en particulier réfrigérateur, équipé d'un compartiment de conservation (3) ayant des parois verticales (2) et des étagères disposées sur des supports (4), lesdits supports (4) pouvant être reliés de manière amovible à des douilles fixes (6) desdites parois verticales (2), dans lequel lesdites douilles fixes (6) sont positionnées dans lesdites parois latérales (2) pour recevoir de manière insérable des extensions tubulaires fendues (5) appartenant au support (4), des chevilles de verrouillage amovibles (8) pouvant être insérées dans lesdites extensions tubulaires (5).

2. Appareil de réfrigération selon la revendication 1, dans lequel le support (4) présente des évidements (11) pour faciliter l'accès aux chevilles de verrouillage (8) en vue de leur retrait.

3. Appareil de réfrigération selon l'une quelconque des revendications précédentes, dans lequel le support (4) est sensiblement en forme de barre avec une partie horizontale (A) faisant saillie depuis une partie verticale (B) devant être appliquée sur la paroi (2) du compartiment de conservation (3).
